# EUROPEAN PATENT APPLICATION

(11) **EP 4 693 072 A1**
(43) Date of publication of application: **11.02.2026**
(21) Application number: 24778006.7
(22) Date of filing: 26.03.2024
(51) Int. Cl.: G06F 16/78, G06F 16/783, G06F 16/738

(54) **INFORMATION PRESENTATION METHOD AND APPARATUS, AND COMPUTER DEVICE AND STORAGE MEDIUM**

(30) Priority: 28.03.2023 CN 202310315733
(71) Applicant: Beijing Zitiao Network Technology Co., Ltd., Beijing 100190 (CN)
(72) Inventor: CAO, Yang, Beijing 100028 (CN); CHEN, Jinglin, Beijing 100028 (CN)
(74) Representative: Isarpatent
(86) International application number: PCT/CN2024/083806
(87) International publication number: WO 2024/199218

(57) **Abstract**

Provided in the present disclosure are an information presentation method and apparatus, and a computer device and a storage medium. The method comprises: acquiring a plurality of search words associated with a target video, wherein the plurality of search words comprise a first search word for initiating a search after the target video is viewed, and a second search word for initiating a search after the target video and comments corresponding to the target video are viewed; presenting a video search word in an associated manner on a playing page of the target video, wherein the video search word is determined on the basis of the first search word and is related to a video feature of the target video; and presenting a comprehensive search word on a comment page of the target video, wherein the comprehensive search word is determined on the basis of the first search word and the second search word and is related to the video feature and/or a comment feature of the comments.

## Description

The present application claims priority to Chinese Patent Application No. 202310315733.3, filed on March 28, 2023, which is incorporated herein by reference in its entirety as a part of the present application.

### TECHNICAL FIELD

The present disclosure relates to a method and a device for information displaying, a computer apparatus, and a storage medium.

### BACKGROUND

On a video playback platform, after watching a video, a user may also browse comments under the video. After viewing the information, the user may have extended search demands for a part of interest therein. Therefore, search information is displayed at respective associated positions of the video and the comments. However, since comments usually contain extended discussion content that is not included in the video, a search term displayed in association with the video may be related to the comment but not related to the video, and consequently the user does not select the search content to perform extended search after watching the video, which results in a waste of displayed information and a poor user experience.

### SUMMARY

Embodiments of the present disclosure provide at least a method and a device for information displaying, a computer apparatus, and a storage medium.

According to a first aspect, an embodiment of the present disclosure provides a method for information displaying. The method includes: obtaining a plurality of search terms associated with a target video, wherein the plurality of search terms comprise a first search term for initiating a search after the target video is viewed, and a second search term for initiating a search after the target video and a comment corresponding to the target video are viewed; displaying a video search term in an associated manner on a playback page of the target video, wherein the video search term is determined based on the first search term, and is related to a video feature of the target video; and displaying a synthesis search term on a comment page of the target video, wherein the synthesis search term is determined based on the first search term and the second search term, and is related to the video feature and/or a comment feature of the comment.

In an optional implementation, the method further includes: determining a target search term based on evaluation information corresponding to each of the plurality of search terms, wherein the target search term comprises the video search term and a comment search term, and the evaluation information of the search term is determined based on at least one of following information: for the target video, a number of historical searches for the search term, a consumption result corresponding to a search result associated with the search term, and behavior information of a related search which occurs after the search result is displayed.

In an optional implementation, the target search term is dynamically determined in the following manner: determining a content attribute feature which meets a preset consumption condition in a current time period, wherein the preset consumption condition comprises at least one of: a number of searches corresponding to a search term matching the content attribute feature exceeding a preset number of searches, or a consumption amount corresponding to multimedia content matching the content attribute feature exceeding a preset consumption amount; and in response to any one of the plurality of search terms being related to the content attribute feature, updating the target search term by using the search term.

In an optional implementation, the method further includes: determining relevance between each of the plurality of search terms and the video feature and/or the comment feature by: inputting the target video and the search term as input data into a relevance detection model which is pre-trained, so that the relevance detection model outputs the relevance between the search term and the video feature of the target video and/or the comment feature of the comment, wherein the relevance detection model comprises a first detection model and a second detection model, the first detection model is configured to detect the relevance between the search term and the video feature, and a second detection model is configured to detect the relevance between the search term and the video feature and/or the comment feature.

In an optional implementation, the displaying a synthesis search term on a comment page of the target video includes: in response to a comment viewing operation, displaying at least one piece of comment content and a synthesis search term associated with the at least one piece of comment content on the comment page; and in response to a swipe operation on the comment page, displaying updated comment content and a synthesis search term associated with the updated comment content.

In an optional implementation, the displaying a video search term in an associated manner on a playback page of the target video includes: on the playback page, updating and displaying a video search term associated with a currently played video segment, wherein the target video comprises a plurality of video segments, each of the plurality of video segments is associated with a corresponding video search term, and each of the plurality of video segment comprises at least one video frame.

In an optional implementation, the video feature of the target video comprises a video feature of the target video in at least one video dimension; and the at least one video dimension comprises at least one of the following: a video description dimension corresponding to description information of the target video, a video content dimension corresponding to image content indicated in the target video, and a viewing behavior dimension corresponding to viewing behavior of a user viewing the target video.

According to a second aspect, an embodiment of the present disclosure further provides a device for information displaying. The device includes: an obtaining module, configured to obtain a plurality of search terms associated with a target video, wherein the plurality of search terms comprise a first search term for initiating a search after the target video is viewed, and a second search term for initiating a search after the target video and a comment corresponding to the target video are viewed; a first display module, configured to display a video search term in an associated manner on a playback page of the target video, wherein the video search term is determined based on the first search term, and is related to a video feature of the target video; and a second display module, configured to display a synthesis search term on a comment page of the target video, wherein the synthesis search term is determined based on the first search term and the second search term, and is related to the video feature and/or a comment feature of the comment.

In an optional implementation, the device further includes a processing module, configured to: determine a target search term based on evaluation information corresponding to each of the search terms; wherein the target search term includes a video search term and a comment search term; and the evaluation information of the search term is determined based on at least one of the following information: for the target video, a number of historical searches for the search term, a consumption result corresponding to a search result associated with the search term, and behavior information of a related search that occurs after the search result is displayed.

In an optional implementation, the target search term is dynamically determined in the following manner: determining a content attribute feature that meets a preset consumption condition in a current time period; the preset consumption condition includes at least one of: a number of searches corresponding to a search term matching the content attribute feature exceeding a preset number of searches, or a consumption amount corresponding to a multimedia content matching the content attribute feature exceeding a preset consumption amount; and in response to any one of the plurality of search terms being related to the content attribute feature, updating the target search term by using the search term.

In an optional implementation, relevance between each of the search terms and the video feature and/or the comment feature is determined in the following manner: inputting the target video and the search term as input data into a pre-trained relevance detection model, so that the relevance detection model outputs relevance between the search term and the video feature of the target video and/or the comment feature of the comment; wherein the relevance detection model includes a first detection model configured to detect the relevance between the search term and the video feature, and a second detection model configured to detect the relevance between the search term and the video feature and/or the comment feature.

In an optional implementation, when displaying a synthesis search term on a comment page of the target video, the second display module is configured to: in response to a comment viewing operation, display at least one piece of comment content and a synthesis search term associated with the at least one piece of comment content on the comment page; and in response to a swipe operation on the comment page, display the updated comment content and a synthesis search term associated with the updated comment content.

In an optional implementation, when displaying a video search term in an associated manner on a playback page of the target video, the first display module is configured to: update and display a video search term associated with a currently played video segment on the playback page, the target video includes a plurality of video segments, each of the video segments is associated with a corresponding video search term, and the video segment includes at least one video frame.

In an optional implementation, the video feature of the target video includes a video feature of the target video in at least one video dimension; wherein the video dimension includes at least one of the following: a video description dimension corresponding to description information of the target video, a video content dimension corresponding to image content indicated in the target video, and a viewing behavior dimension corresponding to viewing behavior of a user viewing the target video.

According to a third aspect, an optional implementation of the present disclosure further provides a computer apparatus including a processor and a memory, wherein the memory stores machine-readable instructions executable by the processor, the processor is configured to execute the machine-readable instructions stored in the memory, and the machine-readable instructions, when executed by the processor, cause the processor to perform steps in the first aspect or any one of possible implementations of the first aspect.

According to a fourth aspect, an optional implementation of the present disclosure further provides a computer-readable storage medium storing a computer program, wherein the computer program, when run, causes the steps in the first aspect or any one of possible implementations of the first aspect to be performed.

In order to make the above objectives, features, and advantages of the present disclosure more obvious and comprehensible, a detailed description will be provided below with reference to the preferred embodiments and in conjunction with the accompanying drawings.

### BRIEF DESCRIPTION OF DRAWINGS

In order to more clearly illustrate the technical solutions in the embodiments of the present disclosure, the accompanying drawings for describing the embodiments will be briefly described below. The accompanying drawings herein, which are incorporated into and form a part of the description, show the embodiments in line with the present disclosure and are used in conjunction with the description to illustrate the technical solutions of the present disclosure. It should be understood that the following accompanying drawings only show some embodiments of the present disclosure, and therefore should not be considered as a limitation on the scope. For those of ordinary skill in the art, other related accompanying drawings can be derived from these accompanying drawings without creative efforts.
Fig. 1 is a flowchart of an information display method according to an embodiment of the present disclosure;
Fig. 2 is a schematic diagram of displaying a target search term according to an embodiment of the present disclosure;
Fig. 3 is a schematic diagram of displaying different video search terms while playing target videos according to an embodiment of the present disclosure;
Fig. 4 is a schematic diagram of displaying comment content and a synthesis search term on a comment page according to an embodiment of the present disclosure;
Fig. 5 is a flowchart of an information display method in specific implementation according to an embodiment of the present disclosure;
Fig. 6 is a schematic diagram of an information display device according to an embodiment of the present disclosure; and
Fig. 7 is a schematic diagram of a computer apparatus according to an embodiment of the present disclosure.

### DETAILED DESCRIPTION

In order to make the objectives, technical solutions, and advantages of embodiments of the present disclosure clearer, the technical solutions in the embodiments of the present disclosure will be clearly and completely described below with reference to the accompanying drawings in the embodiments of the present disclosure. Apparently, the described embodiments are merely some rather than all of the embodiments of the present disclosure. In general, the components of the embodiments of the present disclosure described and shown herein may be arranged and designed in various different configurations. Therefore, the following detailed description of the embodiments of the present disclosure is not intended to limit the scope of protection of the present disclosure, but merely represents selected embodiments of the present disclosure. All other embodiments obtained by those skilled in the art based on the embodiments of the present disclosure without creative efforts shall fall within the scope of protection of the present disclosure.

It has been found through research that on a video playback platform, a user may obtain information by watching a video and a comment under the video. However, the demand of the user for obtaining information is not limited to this. During the process of watching the video or viewing the comment, the user has extended search demands for a part of interest therein. In some cases, during the consumption, the user follows an order of watching a video first and then browsing comments, and the comments may contain extended discussion content about the video. However, when an extended search term is displayed, it may appear that a search term displayed in association with the video is related to the comments but not related to the video, and then the user does not select the search content to perform extended search after watching the video, which results in a waste of displayed information and a poor user experience.

Based on the above research, the present disclosure provides a method for information displaying, where a plurality of search terms associated with a target video are obtained first, including a first search term for initiating a search after the target video is viewed, and a second search term for initiating a search after the target video and a comment are viewed. When the search term is displayed in an associated manner on a playback page of the target video, a video search term related to a video feature of the target video is selected for display from the first search term, and when the search term is displayed in an associated manner on a comment page of the target video, a synthesis search term related to the video feature and/or a comment feature of the comment is displayed from the first search term and the second search term. In this way, when search terms are displayed in an associated manner for a target video and a comment, the scope of the specific content being currently watched by the user is fully considered, and during the selection, the relevance degree between the search term and the target video or the comment is also considered based on a video feature and/or a comment feature. After the user watches some content, the platform can provide a search term related to the content that the user has watched, thereby meeting the extended search demand of the user for content of interest and reducing the waste of displayed information.

The defects that exist in the above solution are all obtained by the inventor through practice and careful research. Therefore, the process of discovering the above problem, and the solving solution proposed about the above problem in the present disclosure hereinafter should all be contributions made by the inventor to the present disclosure in the course of the present disclosure.

It should be noted that similar reference signs and letters refer to similar items in the following accompanying drawings. Therefore, once a specific item is defined in one of the accompanying drawings, it does not need to be further defined and explained in subsequent accompanying drawings.

To facilitate an understanding of the embodiment, a method for information displaying disclosed in an embodiment of the present disclosure is first described in detail. An execution body of the information display method provided in the embodiment of the present disclosure is generally a computer apparatus with some computing capabilities. The computer apparatus includes, for example: a terminal apparatus, a server, or another processing apparatus. The terminal apparatus may be user equipment (UE), a mobile apparatus, a user terminal, a terminal, a cellular phone, a cordless phone, a personal digital assistant (PDA), a handheld apparatus, a computing apparatus, an in-vehicle apparatus, a wearable apparatus, or the like. In some possible implementations, the information display method may be implemented by invoking computer-readable instructions stored in a memory by a processor.

The information display method according to the embodiment of the present disclosure is described below. The information display method according to the embodiment of the present disclosure may be specifically applied to a video playback platform, such as a short-form video playback platform or a shopping platform that can play videos. In addition to the function of playing a video, a function of viewing comments under the video is also provided on these platforms. The comments under the video may be information posted by a user who watch the video, usually including a comment related to the content of the video and a comment that go beyond the content recorded in the video itself.

For example, a target video played on a platform records the daily life of a user A. However, since the user A resembles a celebrity A, comments for the target video may include multiple comments about the topic that the user A resembles the celebrity A. In this case, "celebrity A" may be displayed as a search term. The search term may be displayed in association with the target video or the comments.

In one case, since an order at which a user watches a target video and a comment is generally to watch a target video first and then view the comment, if the search term "celebrity A" is displayed in association with the target video, the user who only watches the target video does not take celebrity A as a content of interest to perform searching, because "celebrity A" is actually only associated with the comment and is not content contained in the target video itself, which results in a waste of displayed information. However, according to the information display method in the embodiment of the present disclosure, a search term to be displayed in association with a target video and a comment may be determined according to information obtaining habit of the user for the target video and the comment, and the relevance between the search term and corresponding features of the target video and the comment. In this way, after the user watches some content, the platform may provide a search term related to the content that the user has watched, thereby meeting the extended search demands of the user for content of interest.

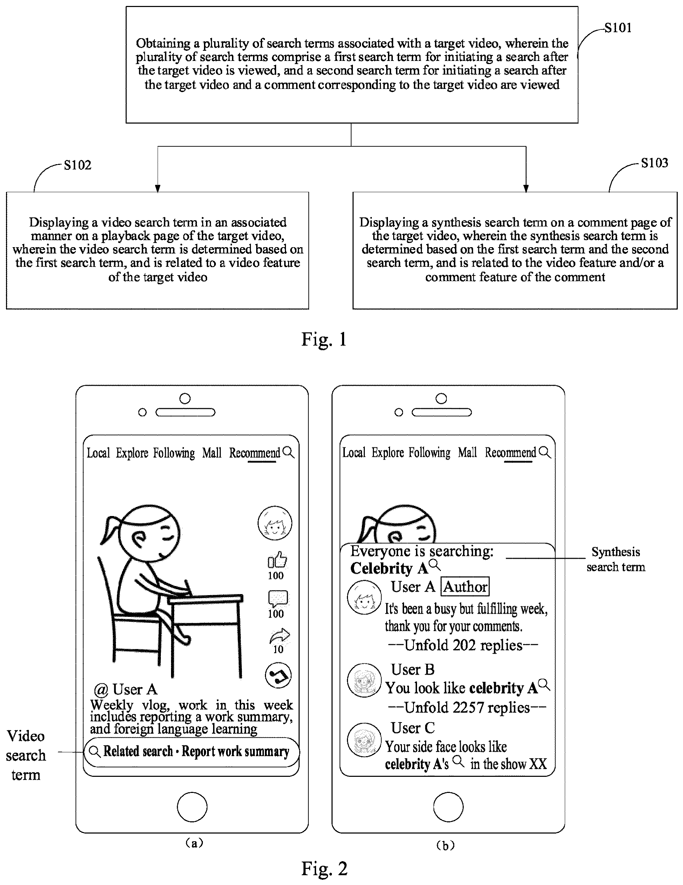

Refer to Fig. 1, Fig. 1 is a flowchart of an information display method according to an embodiment of the present disclosure. The method includes steps S101 to S103.

S101: obtaining a plurality of search terms associated with a target video, wherein the plurality of search terms include a first search term for initiating a search after the target video is viewed, and a second search term for initiating a search after the target video and a comment corresponding to the target video are viewed.

S102: displaying a video search term in an associated manner on a playback page of the target video, wherein the video search term is determined based on the first search term, and is related to a video feature of the target video.

S103: displaying a synthesis search term on a comment page of the target video, wherein the synthesis search term is determined based on the first search term and the second search term, and is related to the video feature and/or a comment feature of the comment.

S101 to S103 are described below in detail.

Regarding S101, the target video is first described. In embodiments of the present disclosure, target videos vary in different scenarios. For example, in the short-form video platform described above, the target video may be any short-form video played to users on the platform; or in the shopping platform described above, the target video may be a product introduction video that introduces a product, or a live streaming video, depending on actual application scenarios.

For the target video, a plurality of search terms associated with the target video may be obtained. The search terms described here include a search term initiated after specific content is viewed. Specifically, the plurality of search terms may include the first search term and the second search term. Since the first search term is displayed in association with the target video, when obtaining the first search term, a search term initiated by the user who only watches the video is selected as the first search term. As for the second search term, since the second search term is displayed in association with comment information corresponding to the target video, during selecting, a search term initiated by the user who views the target video and the comment is selected as the second search term.

Here, exemplarily, the target video is, for example, the daily life of the user A described above, specifically including, for example, daily work and daily study of the user A. When determining the first search term, since for the user who only watches the target video, the information obtained from the target video by the user is only the daily work and study of the user A, the user may initiate search terms related to the video content, such as "report work summary" or "foreign language learning", after watching the target video; or the user may initiate search terms that are less associated with the content of the target video, such as other search terms which are thought of, for example, "time plan management". These search terms may be search terms initiated by one or more users after watching the target video, and are used as the first search term in embodiments of the present disclosure.

After watching the target video, a user generally further checks the comment corresponding to the target video. Since comments are generally information of discussion nature posted by other users for the target video, comments may contain more divergent and extensive information than the content itself contained in the target video. In one possible case, if the comments include information related to the video, search terms to be initiated by the user after viewing the comments may include search terms such as "foreign language learning". In another possible case, in the above example, the comments may also contain multiple pieces of information about the topic that the user A resembles the celebrity A, and thus the user may search the celebrity A after viewing the comments, for example, initiate search terms such as "celebrity A" and "photos of celebrity A". In the above two cases, all the search terms that initiate the search may be used as the second search term.

For above S102 and S103, the first search term and the second search term determined in the above steps may be used to determine a video search term displayed in association with the target video and a synthesis search term displayed in association with the comment.

The video search term is determined based on the first search term, and is related to a video feature of the target video; the synthesis search term is determined based on the first search term and the second search term, and is related to the video feature and/or a comment feature of the comment.

Next, a manner for determining a video search term and a synthesis search term is first described. Both the video search term and the synthesis search term are determined from search terms such as a corresponding first search term, or corresponding first search term and second search term, and are related to feature information such as a video feature, or a video feature and/or a comment feature of a comment. Therefore, in the embodiments of the present disclosure, both the video search term and the synthesis search term are used as a target search term, that is, the target search term includes the video search term and the synthesis search term. Then, a manner for determining the target search term is explained.

In a specific implementation, the target search term may be determined in the following manner: determining a target search term based on evaluation information corresponding to each of the search terms; wherein the target search term includes a video search term and a comment search term; the evaluation information of the search term is determined based on at least one of the following information: for the target video, a number of historical searches for the search term, a consumption result corresponding to a search result associated with the search term, and behavior information of a related search that occurs after the search result is displayed.

Due to the limitation of a display region when the target search terms are displayed, only a limited number of target search terms can be displayed, for example, for both a target video and comments, one or two search terms are displayed in an associated manner. Hence, when a plurality of search terms have been determined, the search terms need to be screened to determine a target search term for display. In this case, it may be determined based on evaluation information whether any one of the search terms is more suitable for display as a target search term.

Here, determining whether a search term is suitable for display as a target search term may be considered from multiple dimensions. For example, it may be considered whether the search term has been searched multiple times for a target video, so as to prove that the search term is indeed a search term for which a user generally needs to perform an extended search after watching the target video. In this case, the search term may be displayed so that the user can rapidly obtain information related to the search term by readily performing a trigger operation on the search term.

**In** addition, it may further be considered whether a search result associated with the search term can meet the extended search intention of the user, which can verify the search efficiency of the search term. For instance, in the above example, the information obtained by a user system through the target search term is a specific appearance of the celebrity A, the search results under the search term "photos of the celebrity A" each include a photo that directly show the appearance of the celebrity A, while the search results under the search term "celebrity A" may include information such as music works and news reports related to celebrity A, and cannot allow the user to directly know the appearance of celebrity A. Therefore, the search results associated with the former search term, compared to those associated with the latter search term, are more in line with the extended search demand for the target video, and thus the former search term is more suitable for display as a target search term.

**In** addition, behavior information of a related search that occurs after a search result associated with the search term is displayed may also be considered to determine whether the search result is consumed effectively, thereby inferring whether the search term is suitable for display as a target search term. For instance, regarding any search term for the target video, after a search result associated is displayed, the user continues to conduct a related search, which may be a search using other search terms semantically identical to the search term, or a further search. Exemplarily, still in the above example, the behavior information of this related search may be specifically replacing "photos of celebrity A" with "front-face photos of celebrity A", or further searching "photos of celebrity A at a younger age". Behavior information of a further search after the search for the target video may reflect whether the selected search term can bring effective and sufficient search results, and therefore may also be used to determine whether the search term is suitable to serve as a target search term.

**In** one possible case, the search terms obtained in association with the target video constantly change over time, which reflects a change in the specific content of interest of the user about the target video at different periods. Exemplarily, if the content corresponding to the target video includes a speech for a school opening day delivered by a representative of company A at university B, when the video is played to users during a job-hunting season, most users may have extended search demand for the company A in the video, so as to obtain an introduction video of the company or the like. However, when the video is played to users during a college admission season, most users may have extended search demand for the university B in the video, so as to obtain a recommendation video of majors in university B or the like.

Therefore, the target search term may be determined dynamically. In a specific implementation, a content attribute feature that meets a preset consumption condition in a current time period may be determined. The preset consumption condition includes at least one of: a number of searches corresponding to a search term matching the content attribute feature exceeding a preset number of searches, or a consumption amount corresponding to a multimedia content matching the content attribute feature exceeding a preset consumption amount; and in response to that any one of the plurality of search terms is related to the content attribute feature, the target search term is updated using the search term.

Here, the current time period to be determined may be set as, for example, three days, five days, or the like prior to the current display time of the target video. Regarding the preset consumption condition, exemplarily, if the number of searches corresponding to a search term related to specific content such as an event or a person exceeds the preset number of searches in the current time period, it can be considered that the content attribute feature corresponding to the specific content meets the preset consumption condition. Alternatively, if a consumption amount of some multimedia content exceeds a preset consumption amount, and the presence of specific subject content is indicated, content attribute features indicated under these subject contents are also content attribute features that meet the preset consumption condition. For instance, in the above example, if a time period is a job-hunting season, and the number of searches for search terms related to "job hunting" exceeds a preset search number threshold, the content attribute feature of "job hunting" may be used as a content attribute feature that meets the preset consumption condition.

When the content attribute feature is determined, it may be further determined whether the plurality of search terms obtained include a search term related to the content attribute feature, and the target search term may be updated using the search term. For instance, in the above example, when the target video is played in the first quarter, the content attribute feature tends to be "job hunting", and then the target search term may be updated to "company introduction of company A". When the target video is played in the second quarter, the content attribute feature tends to be "college admission", and then the target search term may be updated to "recommendation of majors in university B".

In another embodiment of the present disclosure, no matter which of the above manners for determining a target search term is considered, the target search term should be related to its corresponding feature, that is, a video search term should be related to a video feature of the target video, and a synthesis search term should be related to the video feature of the target video and/or a comment feature of a comment. Hence, the relevance between each of the search terms and the video feature and/or comment feature further needs to be determined.

Here, a video feature and a comment feature are described first, and then a manner for determining the relevance is described.

First, a video feature of a target video is described. The video feature of the target video includes a video feature of the target video in at least one video dimension; the video dimension includes at least one of the following: a video description dimension corresponding to description information of the target video, a video content dimension corresponding to image content indicated in the target video, and a viewing behavior dimension corresponding to viewing behavior of a user viewing the target video.

A video feature in multiple video dimensions is described below. A video feature in a video description dimension is specifically configured to express the subject content expressed mainly by a video, and may be obtained according to description information of the target video. Specifically, the description information may be determined from directly obtained information such as search information obtaining the target video, a title of video, a video topic label, an author name, and a name of background music, or may be recognized from the video in the manner of optical character recognition, speech-to-text conversion or the like.

A video feature in a video content dimension is specifically configured to express content contained in a video image displayed in the video, such as an image multi-modal feature, a film or television name indicated in the image, or an actor appearing in the image that are obtained through recognition, that is, a feature associated with the specific content involved in the video.

A video feature corresponding to a viewing behavior dimension is determined specifically based on the user viewing behavior about the target video. For instance, a search term with the highest numbers of searches after a user watches the target video and numbers of searches corresponding to the search terms are obtained, and a video feature in the viewing behavior dimension of the target video is determined through the obtained information.

Moreover, a comment feature of a comment may be determined specifically based on comment content of multiple comments for the target video, and interactive information such as a number of comments, a number of likes, and a number of forwards of the comment content, so as to obtain a content feature that is representative of the comment.

Then, a specific manner for determining the relevance between each of the search terms and the video feature and/or comment feature is described. In an embodiment of the present disclosure, since both the video feature and the comment feature may include multi-dimensional features, a highly efficient model recognition manner is selected for relevance detection.

In a specific implementation, the target video and the search term may be inputted as input data into a pre-trained relevance detection model, so that the relevance detection model outputs the relevance between the search term and the video feature of the target video and/or the comment feature of the comment; where the relevance detection model includes a first detection model configured to detect the relevance between the search term and the video feature, and a second detection model configured to detect the relevance between the search term and the video feature and/or the comment feature.

That is, the relevance detection model includes a multi-branch network, where the first detection model is configured to detect the relevance between the search term and the video feature, and the second detection model is configured to detect the relevance between the search term and the video feature and/or the comment feature. In order to enable the first detection model and the second detection model to perform relevance detection, the video feature of the target video and the comment feature of the comment may also be extracted in the relevance detection model through a feature extraction model set before the first detection model and the second detection model. The relevance detection model described here may also be called as an attribution model, which is configured as an end-to-end neural network model based on the language representation model BERT. A result outputted may be a score, and as the score is higher, it indicates the stronger relevance between the search term and the target video inputted.

In one possible case, for the plurality of available search terms, the relevance of the plurality of available search terms and the target video may be scored by using the relevance detection model, and the plurality of available search terms may be sorted based on a scoring result, and when the number of target search terms that can be displayed is limited, the plurality of search terms are selectively displayed based on the sorting result.

In this way, by any one of the above manners for selecting a target search term, or by at least one combination of the above selection manners, a video search term displayed in an associated manner on a playback page of the target video and a synthesis search term displayed on a comment page of the target video may be determined. When a video search term and a synthesis search term are displayed respectively, exemplarily, refer to Fig. 2, Fig. 2 is a schematic diagram of displaying a target search term according to an embodiment of the present disclosure, wherein (a) in Fig. 2 displays a playback page of the target video and a video search term displayed in an associated manner, and (b) in Fig. 2 displays a comment page of the target video and a displayed synthesis search term. In addition, in the comments in the portion of (b) in Fig. 2, text related to the synthesis search term may also be highlighted, and an icon indicating that the text is searchable may be displayed. For example, in the comments of a user B and a user C, "celebrity A", which is the same as the synthesis search term, is in bold, and a search may be performed directly in response to a trigger operation of a user.

For the playback page that displays the target video, the target video may carry a large amount of video content, for example, the target video includes a plurality of video segments that are associated in content but which each have respective information to display, for example, the target video includes video segments that introduce a plurality of products respectively. Thus, in the process of playing the target video, associated search terms may be further subdivided for each video segment, so that while the target video is being played, a search term corresponding to a content of a current video segment that interests the user is displayed.

In a specific implementation, a video search term associated with the currently played video segment may be updated and displayed on the playback page. The target video includes a plurality of video segments, each of the video segments is associated with a corresponding video search term, and the video segment includes at least one video frame.

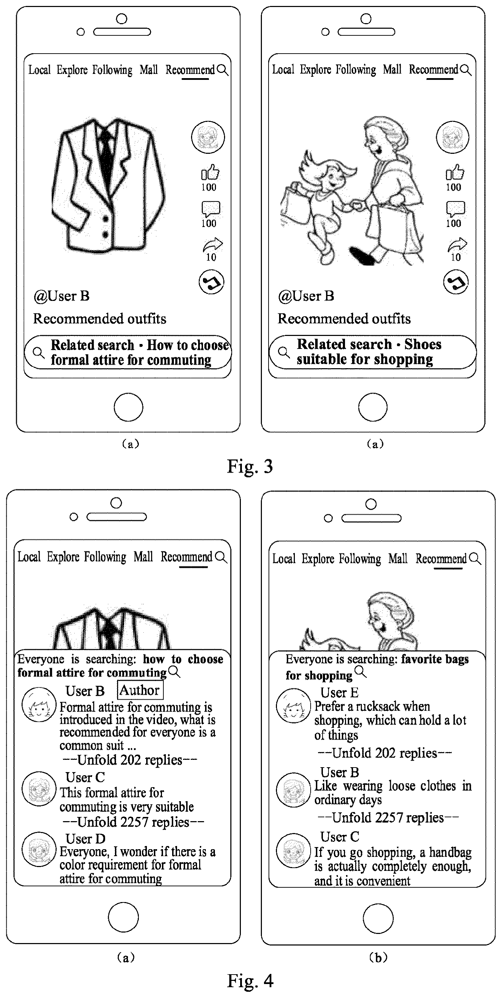

Exemplarily, the target video includes three video segments that respectively introduce three different outfits, namely workplace outfit, shopping outfit, and daily outfit. Accordingly, the video search terms associated with the three video segments may specifically be "how to choose formal attire for commuting", "shoes suitable for shopping", and "daily accessories". Hence, during the playback of the target video, associated video search terms may be displayed for different video segments being displayed. Exemplarily, refer to Fig. 3, Fig. 3 is a schematic diagram of displaying different video search terms while playing a target video according to an embodiment of the present disclosure. In (a) in Fig. 3, while a video segment introducing workplace outfit is being played in the target video, the video search term displayed is "how to choose formal attire for commuting". In (b) in Fig. 3, while a video segment introducing shopping outfit is being played in the target video, the video search term displayed is updated to "shoes suitable for shopping".

In addition, regarding the comments displayed for the target video, when a user displays multiple comments for the target video by swipe or the like, different comment content may be displayed to the user on the comment page. On this basis, if the comments about a certain target video contain many comment contents, there may be many corresponding discussion directions. Therefore, when the comment contents are constantly updated and displayed on the comment page, a synthesis search term associated with the displayed comment content may be displayed.

In a specific implementation, at least one piece of comment content and a synthesis search term associated with the at least one piece of comment content may be displayed on the comment page in response to a comment viewing operation; and in response to a swipe operation on the comment page, displaying the updated comment content and a synthesis search term associated with the updated comment content.

Exemplarily, in the example corresponding to above Fig. 3, the comments may include comment information related to workplace, shopping, daily outfit, or the like. Therefore, when a synthesis search term is displayed, comment content currently displayed to the user through the comment page may be determined, and then a related synthesis search term is displayed.

Specifically, refer to Fig. 4, Fig. 4 is a schematic diagram of displaying a comment content and a synthesis search term on a comment page according to an embodiment of the present disclosure. The comment content displayed in (a) in Fig. 4 are only related to workplace outfit; therefore, the synthesis search term "how to choose formal attire for commuting" may be displayed. Here, in the embodiment of the present disclosure, since the synthesis search term associated with the comments may be related to the video feature of the target video, a video search term associated with the target video may also be used as a synthesis search term. The comment content displayed in (b) in Fig. 4 include comment content related to shopping and daily outfits, but a comment content related to shopping outfit is displayed first. Therefore, synthesis search terms related to shopping outfit, such as "favorite bags for shopping", may be updated and displayed. Alternatively, a synthesis search term related to more comments may be selected for display, for example, (b) in Fig. 4 includes three comments, two of which are about shopping outfit. Therefore, "favorite bags for shopping" is selected for display.

In this way, a video search term may be displayed on the playback page and a synthesis search term may be displayed on the comment page.

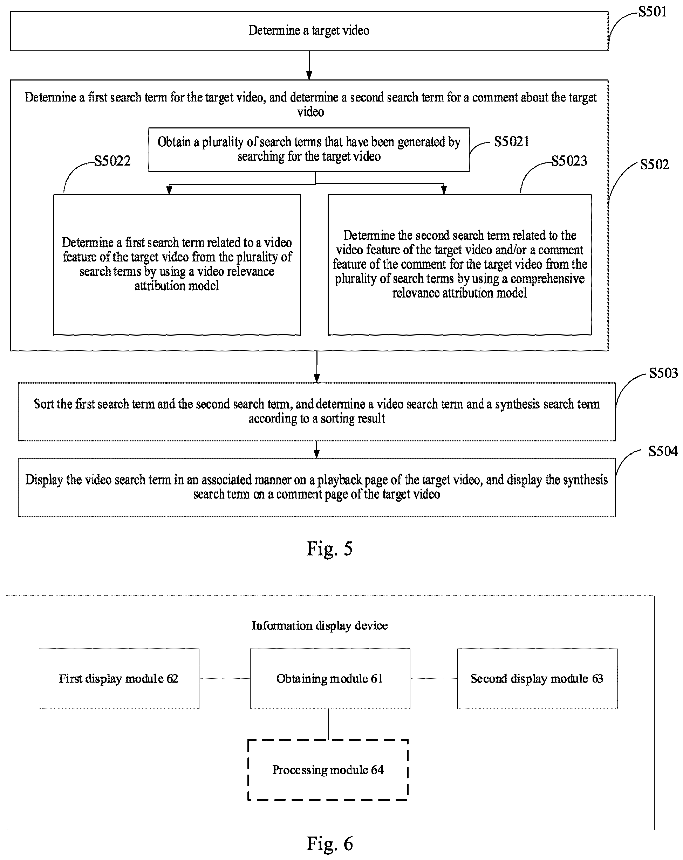

In another embodiment of the present disclosure, a specific embodiment of displaying a video search term for a target video and displaying a synthesis search term for a comment about the target video is also provided. Exemplarily, refer to Fig. 5, Fig. 5 is a flowchart of an information display method in specific implementation according to an embodiment of the present disclosure.

S501: Determining a target video.

S502: Determining a first search term for the target video, and determining a second search term for a comment about the target video.

This step may specifically include:

S5021: Obtaining a plurality of search terms which have been generated by searching for the target video.

S5022: Determining the first search term related to a video feature of the target video from the plurality of search terms by using a video relevance attribution model.

S5023: Determining the second search term related to the video feature of the target video and/or a comment feature of the comment for the target video from the plurality of search terms by using a comprehensive relevance attribution model.

Here, the video relevance attribution model is the first detection model described in the above embodiment; the comprehensive relevance attribution model is the second detection model described in the above embodiment. The relevance between a search term and a video feature and/or a comment feature may be determined by the video relevance attribution model and the comprehensive relevance attribution model, so that the search term may be initially recalled according to a preset relevance threshold.

Here, when the relevance is determined through a model, an offline processing manner may be used.

S503: Sorting the first search term and the second search term, and determining a video search term and a synthesis search term according to a sorting result.

Here, when performing the sorting, sorting and selecting may be performed based on the relevance with the corresponding features, whether it is related to content attribute feature that meet preset consumption condition within the current time period, the video segment played, the comment information displayed, and the like, as described in the above embodiments, so as to obtain the video search term and the synthesis search term.

Here, when the video search term and the synthesis search term are determined by sorting, an offline processing manner may also be employed.

S504: Displaying the video search term in an associated manner on a playback page of the target video, and displaying the synthesis search term on a comment page of the target video.

For the specific implementation of the above steps, reference may be made to the description in corresponding parts of the above embodiments, which will not be repeated here.

Those skilled in the art can understand that, in the above methods of the specific implementations, the order in which the steps are written does not imply a strict execution order, and does not constitute any limitation on the implementation process. The specific execution order of the steps should be determined by their functions and possible internal logics.

Based on the same inventive concept, an information display device corresponding to the information display method is further provided in an embodiment of the present disclosure. Because the principle of solving the problems by the device in the embodiment of the present disclosure is similar to that of the information display method described above in the embodiments of the present disclosure, for the implementation of the device, reference may be made to the implementations of the method, and the repetitions are not described herein again.

Refer to Fig. 6, Fig. 6 is a schematic diagram of an information display device according to an embodiment of the present disclosure. The device includes: an obtaining module 61, a first display module 62, and a second display module 63.

The obtaining module 61 is configured to obtain a plurality of search terms associated with a target video, wherein the plurality of search terms include a first search term for initiating a search after the target video is viewed, and a second search term for initiating a search after the target video and a comment corresponding to the target video are viewed.

The first display module 62 is configured to display a video search term in an associated manner on a playback page of the target video, wherein the video search term is determined based on the first search term, and is related to a video feature of the target video.

The second display module 63 is configured to display a synthesis search term on a comment page of the target video, wherein the synthesis search term is determined based on the first search term and the second search term, and is related to the video feature and/or a comment feature of the comment.

In an optional implementation, the device further includes a processing module 64, configured to: determine a target search term based on evaluation information corresponding to each of the search terms; wherein the target search term includes a video search term and a comment search term; and the evaluation information of the search term is determined based on at least one of the following information: for the target video, a number of historical searches for the search term, a consumption result corresponding to a search result associated with the search term, and behavior information of a related search that occurs after the search result is displayed.

In an optional embodiment, a target search term is dynamically determined in the following manner: determining a content attribute feature that meets a preset consumption condition in a current time period; the preset consumption condition includes at least one of: a number of searches corresponding to a search term matching the content attribute feature exceeding a preset number of searches, or a consumption amount corresponding to a multimedia content matching the content attribute feature exceeding a preset consumption amount; and in response to any one of the plurality of search terms being related to the content attribute feature, updating the target search term by using the search term.

In an optional implementation, relevance between each of the search terms and the video feature and/or the comment feature is determined in the following manner: inputting the target video and the search term as input data into a pre-trained relevance detection model, so that the relevance detection model outputs relevance between the search term and the video feature of the target video and/or the comment feature of the comment; wherein the relevance detection model includes a first detection model configured to detect the relevance between the search term and the video feature, and a second detection model configured to detect the relevance between the search term and the video feature and/or the comment feature.

In an optional implementation, when displaying a synthesis search term on a comment page of the target video, the second display module 63 is configured to: in response to a comment viewing operation, display at least one piece of comment content and a synthesis search term associated with the at least one piece of comment content on the comment page; and in response to a swipe operation on the comment page, display the updated comment content and a synthesis search term associated with the updated comment content.

In an optional implementation, when displaying a video search term in an associated manner on a playback page of the target video, the first display module 62 is configured to: update and display a video search term associated with a currently played video segment on the playback page, the target video includes a plurality of video segments, each of the video segments is associated with a corresponding video search term, and the video segment includes at least one video frame.

In an optional implementation, the video feature of the target video includes a video feature of the target video in at least one video dimension; wherein the video dimension includes at least one of the following: a video description dimension corresponding to description information of the target video, a video content dimension corresponding to image content indicated in the target video, and a viewing behavior dimension corresponding to viewing behavior of a user viewing the target video.

For the description of the processing processes of various modules in the device, and the interaction processes between the modules, reference may be made to the related description in the above method embodiments, and details are not described herein again.

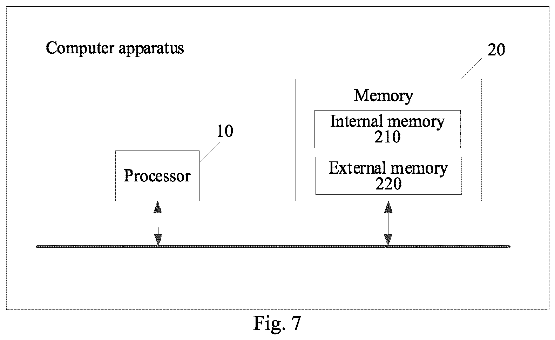

An embodiment of the present disclosure further provides a computer apparatus. Refer to Fig. 7, Fig. 7 is a structural schematic diagram of a computer apparatus according to an embodiment of the present disclosure. The computer apparatus includes:

a processor 10 and a memory 20. The memory 20 stores machine-readable instructions executable by the processor 10. The processor 10 is configured to execute the machine-readable instructions stored in the memory 20. When the machine-readable instructions are executed by the processor 10, the processor 10 performs the following steps:

obtaining a plurality of search terms associated with a target video, wherein the plurality of search terms include a first search term for initiating a search after the target video is viewed, and a second search term for initiating a search after the target video and a comment corresponding to the target video are viewed; displaying a video search term in an associated manner on a playback page of the target video, wherein the video search term is determined based on the first search term, and is related to a video feature of the target video; and displaying a synthesis search term on a comment page of the target video, wherein the synthesis search term is determined based on the first search term and the second search term, and is related to the video feature and/or a comment feature of the comment.

The memory 20 includes an internal memory 210 and an external memory 220. The internal memory 210 herein is also referred to as an inner memory, and is configured to temporarily store operation data in the processor 10 and data exchanged with the external memory 220 such as a hard disk. The processor 10 exchanges data with the external memory 220 by using the internal memory 210.

For the specific execution process of the above instructions, reference may be made to the steps of the information display method described in the embodiments of the present disclosure, and details are not repeated herein.

An embodiment of the present disclosure further provides a computer-readable storage medium storing a computer program. The computer program, when run by a processor, causes the steps of the information display method described in the above method embodiments to be performed. The storage medium may be a volatile or non-volatile computer-readable storage medium.

An embodiment of the present disclosure further provides a computer program product carrying program code, where instructions included in the program code may be configured to perform the steps of the information display method described in the above method embodiments. For details, reference may be made to the above method embodiments, and details are not described herein again.

The above computer program product may be implemented in the form of hardware, software or a combination thereof. In an optional embodiment, the computer program product is specifically embodied as a computer storage medium. In another optional embodiment, the computer program product is specifically embodied as a software product, such as a software development kit (SDK).

It can be clearly understood by those skilled in the art that, for convenience and brevity of description, for the specific operation processes of the system and device described above, reference may be made to the corresponding processes in the foregoing method embodiments, and details are not repeated herein. In the several embodiments provided in the present disclosure, it should be understood that the disclosed system, device, and method may be implemented in other manners. The device embodiment described above is merely an example. For example, the unit division is merely logical function division and may be other division manner during actual implementation. For another example, a plurality of units or components may be combined or integrated into another system, or some features may be omitted or not implemented. In addition, the displayed or discussed mutual couplings, direct couplings, or communication connections may be implemented through some communication interfaces. The indirect couplings or communication connections between the devices or units may be implemented in electrical, mechanical, or other forms.

The units described as separate parts may or may not be physically separate, and parts displayed as units may or may not be physical units, and may be located at one position, or may be distributed on a plurality of network units. Some or all of the units may be selected according to actual needs to achieve the objectives of the solutions of the embodiments.

In addition, various functional units in the various embodiments of the present disclosure may be integrated into one processing unit, each of the units may exist alone physically, or two or more units may be integrated into one unit.

If the functions are implemented in the form of a software functional unit and sold or used as an independent product, the functions may be stored in a non-volatile computer-readable storage medium executable by a processor. Based on such an understanding, a portion of the technical solutions of the present disclosure which essentially make a contribution or a portion of the technical solutions may be implemented in the form of a software product. The computer software product is stored in a storage medium and includes many instructions for causing a computer apparatus (which may be a personal computer, a server, a network device, or the like) to perform all or some of the steps of the methods described in the embodiments of the present disclosure. Moreover, the foregoing storage medium includes various media such as a USB flash drive, a removable hard disk, a read-only memory (ROM), a random access memory (RAM), a magnetic disk, or an optical disc that can store program code.

It should be finally noted that the embodiments described above are merely specific implementations of the present disclosure, and are used for illustrating rather than limiting the technical solutions of the present disclosure, and the scope of protection of the present disclosure is not limited thereto. Although the present disclosure has been described in detail with reference to the foregoing embodiments, those of ordinary skill in the art should understand that, within the technical scope disclosed in the present disclosure, any person skilled in the art could still modify the technical solutions described in the foregoing embodiments, or readily figure out any variation thereof, or make equivalent substitution to some of the technical features thereof. However, these modifications, variations, or substitutions do not make the essence of the corresponding technical solutions depart from the spirit and scope of the technical solutions of the embodiments of the present disclosure, and shall fall within the scope of protection of the present disclosure. Therefore, the scope of protection of the present disclosure shall be subject to the scope of protection of the claims.

## Claims

1. A method for information displaying, comprising:
obtaining a plurality of search terms associated with a target video, wherein the plurality of search terms comprise a first search term for initiating a search after the target video is viewed, and a second search term for initiating a search after the target video and a comment corresponding to the target video are viewed;
displaying a video search term in an associated manner on a playback page of the target video, wherein the video search term is determined based on the first search term, and is related to a video feature of the target video; and
displaying a synthesis search term on a comment page of the target video, wherein the synthesis search term is determined based on the first search term and the second search term, and is related to the video feature and/or a comment feature of the comment.

2. The method according to claim 1, further comprising:
determining a target search term based on evaluation information corresponding to each of the plurality of search terms, wherein the target search term comprises the video search term and a comment search term; and
the evaluation information of the search term is determined based on at least one of following information: for the target video, a number of historical searches for the search term, a consumption result corresponding to a search result associated with the search term, and behavior information of a related search which occurs after the search result is displayed.

3. The method according to claim 1 or 2, wherein the target search term is dynamically determined by:
determining a content attribute feature which meets a preset consumption condition in a current time period, wherein the preset consumption condition comprises at least one of: a number of searches corresponding to a search term matching the content attribute feature exceeding a preset number of searches, or a consumption amount corresponding to multimedia content matching the content attribute feature exceeding a preset consumption amount; and
in response to any one of the plurality of search terms being related to the content attribute feature, updating the target search term by using the search term.

4. The method according to claim 1 or 2, further comprising: determining relevance between each of the plurality of search terms and the video feature and/or the comment feature by:
inputting the target video and the search term as input data into a relevance detection model which is pre-trained, so that the relevance detection model outputs the relevance between the search term and the video feature of the target video and/or the comment feature of the comment,
wherein the relevance detection model comprises a first detection model and a second detection model, the first detection model is configured to detect the relevance between the search term and the video feature, and a second detection model is configured to detect the relevance between the search term and the video feature and/or the comment feature.

5. The method according to claim 1, wherein the displaying a synthesis search term on a comment page of the target video comprises:
in response to a comment viewing operation, displaying at least one piece of comment content and a synthesis search term associated with the at least one piece of comment content on the comment page; and
in response to a swipe operation on the comment page, displaying updated comment content and a synthesis search term associated with the updated comment content.

6. The method according to claim 1, wherein the displaying a video search term in an associated manner on a playback page of the target video comprises:
on the playback page, updating and displaying a video search term associated with a currently played video segment, wherein the target video comprises a plurality of video segments, each of the plurality of video segments is associated with a corresponding video search term, and each of the plurality of video segment comprises at least one video frame.

7. The method according to claim 1, wherein the video feature of the target video comprises a video feature of the target video in at least one video dimension; and
the at least one video dimension comprises at least one of following: a video description dimension corresponding to description information of the target video, a video content dimension corresponding to image content indicated in the target video, and a viewing behavior dimension corresponding to viewing behavior of a user viewing the target video.

8. A device for information displaying, comprising:
an obtaining module, configured to obtain a plurality of search terms associated with a target video, wherein the plurality of search terms comprise a first search term for initiating a search after the target video is viewed, and a second search term for initiating a search after the target video and a comment corresponding to the target video are viewed;
a first display module, configured to display a video search term in an associated manner on a playback page of the target video, wherein the video search term is determined based on the first search term, and is related to a video feature of the target video; and
a second display module, configured to display a synthesis search term on a comment page of the target video, wherein the synthesis search term is determined based on the first search term and the second search term, and is related to the video feature and/or a comment feature of the comment.

9. A computer apparatus, comprising: a processor and a memory, wherein
the memory stores machine-readable instructions executable by the processor, the processor is configured to execute the machine-readable instructions stored in the memory, and the machine-readable instructions, when executed by the processor, cause the processor to perform steps of the method for information displaying according to any one of claims 1 to 7.

10. A computer-readable storage medium, wherein a computer program is stored on the computer-readable storage medium, and when the computer program is run by a computer apparatus, the computer apparatus performs steps of the method for information displaying according to any one of claims 1 to 7.
